Europäisches Patentamt

European Patent Office

Office européen des brevets

(19)

(11) **EP 1 517 499 A2**

(12) **EUROPEAN PATENT APPLICATION**

(43) Date of publication:
23.03.2005 Bulletin 2005/12

(51) Int Cl.⁷: **H04L 25/03**

(21) Application number: **04022044.4**

(22) Date of filing: **16.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **16.09.2003 KR 2003064038**

(71) Applicant: **Samsung Electronics Co., Ltd.
Suwon-city, Gyeonggi-do (KR)**

(72) Inventors:
• **Kim, Noh-Sun
Suwon-si Gyeonggi-do (KR)**

• **Kim, Hun-Kee
Suwon-si Gyeonggi-do (KR)**
• **Jung, Hea-Kyoung
Suwon-si Gyeonggi-do (KR)**
• **Choi, Gin-Kyu
Suwon-si Gyeonggi-do (KR)**

(74) Representative: **Lang, Johannes, Dipl.-Ing.
Bardehle Pagenberg Dost Altenburg Geissler
Isenbruck,
Postfach 86 06 20
81633 München (DE)**

(54) **Apparatus and method for transceiving high speed packet data in mobile communication system**

(57)    Disclosed is an apparatus and a method for transceiving high speed packet data, in which the high speed packet data are scrambled by using a scrambling code at a transmitter and the high speed packet data are de-scrambled by using a scrambling code at a receiver. When estimating a ratio of pilot power to traffic power, a problem caused by an unevenness of the power ratio is prevented. In addition, data is prevented from being transferred to an upper layer even if an HS-PD-SCH is demodulated without UE data due to a detection error in an HS-SCCH during transmission of the HS-PD-SCH.

**Description**

## BACKGROUND OF THE INVENTION

Field of the Invention:

The present invention relates to an apparatus and a method for transceiving high speed packet data in a mobile communication system. More particularly, the present invention relates to an apparatus and a method for transceiving high speed packet data by scrambling the high speed packet data using a predetermined scrambling code.

Description of the Related Art:

Recently, mobile communication systems have developed into high-speed and high-quality data packet communication systems capable of providing not only voice services, but also data services and multimedia services. In addition, standardization for high-speed and high-quality data packet services is being carried out in the 3rd Generation Partnership Project (3GPP) and the 3rd Generation Partnership Project 2 (3GPP2), which are consortiums for providing standards for $3^{rd}$ generation mobile communication systems. For instance, the 3GPP carries out standardization for high-speed downlink packet access (HSDPA) and the 3rd Generation Partnership Project 3 (3GPP3) carries out standardization for IxEV-DV. Such standardization work is necessary to provide high-speed and high-quality wireless data packet transmission services at a speed above 2Mbps in the $3^{rd}$ generation mobile communication systems. In a case of a 4 $^{th}$ generation mobile communication system, which is the next generation mobile communication system of the $3^{rd}$ generation mobile communication system, it is possible to provide high-speed and high-quality multimedia services at a speed above 2Mbps.

In a wireless communication system, a radio channel environment may seriously influence the high-speed and high-quality multimedia services. The radio channel environment may frequently vary depending on white noise, variation of signal power caused by fading, shadowing, a Doppler effect according to the movement and speed variation of the user equipment, and interference caused by other UEs and multipath signals. Therefore, in order to provide the high-speed and high-quality data packet services, it is necessary to provide an advanced technology system having superior adaptive capability with respect to variation of the radio channel environment in addition to conventional technologies. A high-speed power control scheme employed in a conventional mobile communication system may improve the adaptive capability of the mobile communication system with regard to variation of the radio channel environment. However, the 3GPP and the 3GPP2 performing standardization work for the high-speed data packet systems commonly suggest an adaptive modulation and coding scheme (AMCS) and a hybrid automatic repeat request (HARQ) scheme.

According to the AMCS, a modulation scheme and a coding rate are varied according to the variation in the channel environment of a downlink. Generally, the channel environment of the downlink is revealed by measuring an NSR (noise to signal ratio) at a user equipment (UE) and transmitting NSR information to a base station through an uplink. Upon receiving the NSR information, the base station estimates the channel environment of the downlink based on the NSR information and determines the modulation scheme and the coding rate based on the estimated channel environment of the downlink. Modulation schemes used for the high-speed packet data transmission systems include QPSK, 8PSK, 16QAM and 64QAM, and the coding rate used for the high-speed packet data transmission systems is 1/2 or 3/4. A mobile communication system employing the AMCS applies a higher modulation scheme of 16QAM or 640QAM and a higher coding rate of 3/4 to a user equipment, which is positioned adjacent to a base station so that the user equipment has a superior channel environment. However, the mobile communication system employing the AMCS applies a lower modulation scheme of QPSK or 8PSK and a lower coding rate of 1/2 to the user equipment, which is positioned at a boundary area of cells so that the user equipment has an inferior channel environment. The AMCS may reduce interference signals as compared with a conventional high-speed power control scheme, thereby improving performance of the mobile communication system.

The HARQ scheme is a link control scheme for requesting retransmission of a data packet when an error occurs in the data packet. Generally, the HARQ includes a chase combining (CC) scheme, a full incremental redundancy (FIR) scheme, and a partial incremental redundancy (PIR) scheme.

According to the CC scheme, a packet identical to a packet previously transmitted at an initial stage is retransmitted. Thus, the retransmitted packet is combined with the previously transmitted packet at a receiver. Thus, the reliability of coded bits input into a decoder may be improved as well as the performance of the mobile communication system. At this time, since the two same packets are combined with each other, an effect similar to a repetition coding effect may occur, so a performance gain of about 3dB in average may be achieved.

According to the FIR scheme, new parity bits are transmitted when retransmitting the packet so that performance of the decoder installed at the receiver can be improved. That is, coding work is carried out by using not only information obtained through an early stage transmission, but also new parity bits obtained through the retransmission of the packet, so that the coding rate can be reduced, thereby improving performance of the decoder. As is generally known in the art, the performance gain based on a low coding rate is larger than a performance gain based on a repetition coding. Accordingly, when taking only the performance gain into consideration, the FIR scheme represents performance superior to that of the CC scheme.

Different from the FIR scheme, the PIR scheme retransmits the packet by using a combination of systematic bits and new parity bits. Accordingly, the retransmitted systematic bits are combined with previously transmitted systematic bits when coding the systematic bits so that the PIR scheme represents an effect similar to that of the CC scheme. In addition, since the PIR scheme uses the new parity bits, the PIR scheme also represents an effect similar to that of the FIR scheme. The coding rate of the PIR scheme is slightly higher than the coding rate of the FIR scheme, so the PIR scheme represents an intermediate performance gain as compared with performance gain of the FIR scheme and the CC scheme.

When employing the above mentioned HARQ scheme in the mobile communication system, a buffer size and a signaling of a receiver (or UE) must be considered in addition to performance thereof, so it is not easy for a UE to select one of the AMCS and the HARQ scheme.

Both of the AMCS and HARQ may increase adaptive capability of the mobile communication system with respect to channel variation of the link in a separate way. Thus, performance of the mobile communication system may be significantly improved if the mobile communication system employs a combination of the AMCS and HARQ. If the modulation scheme and the coding rate adaptable for a channel environment of a downlink channel are determined based on the AMCS, corresponding data packets are transmitted. A receiver sends a signal requesting retransmission of the data packets if it fails to decode the data packets. Upon receiving the signal from the receiver, the base station retransmits the data packets according to the AMCS.

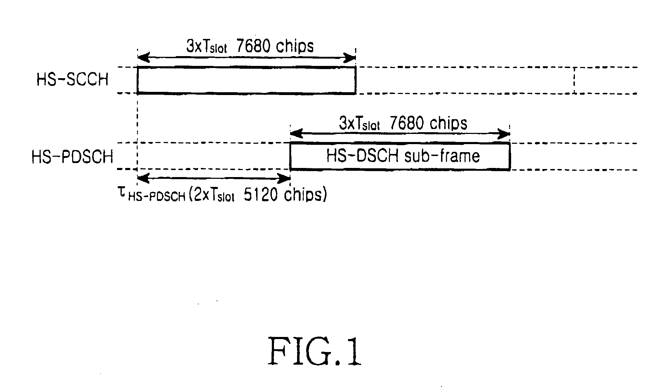

FIG. 1 is a view illustrating channels used for high speed packet transmission in a conventional asynchronous mobile communication system. In particular, FIG. 1 illustrates a timing-relationship between a high speed-shared control channel (HS-SCCH) and a high speed-physical downlink shared channel (HS-PDSCH), which are adopted in a downlink for the purpose of HSDPA services.

Referring to FIG. 1, the HS-SCCH has a Transmission Time Interval(TTI) of 7680 chips ($3x\ T_{slot}$) and receives control information required for receiving the HS-PDSCH. The HS-PDSCH includes the HS-SCCH and an offset ($\tau_{HS\text{-}PDSCH}$) of 5120 chips ($2x\ T_{slot}$) and receives high speed packets according to the HSDPA service. The HS-PDSCH has a TTI having a length identical to the length of the TTI of the HS-SCCH.

The HS-SCCH is divided into two parts including information shown in Table 1. In Table 1. () indicates the number of information bits.

| 1 st part | 2nd part |
|---|---|
| Channelization code set (7) | Transport block size (6) |
| Modulation scheme (1) | Hybrid ARQ process (3) |
| | Redundancy and constellation version (3) |
| | New data indicator (1) |
| | UE identity (16) |

The user equipment (UE) decodes the HS-SCCH and obtains the control information required for decoding the HS-PDSCH. In a current asynchronous mobile communication system, one UE can monitor four HS-SCCHs. Accordingly, the UE checks whether or not there is control information related to the HS-DPSCH to be received in the UE after decoding all of the four HS-SCCHs. If there is control information related to the HS-DPSCH received in the UE, the UE decodes the HS-PDSCH based on the control information. If there is no control information related to the HS-DPSCH received in the UE, the UE receives a next HS-SCCH.

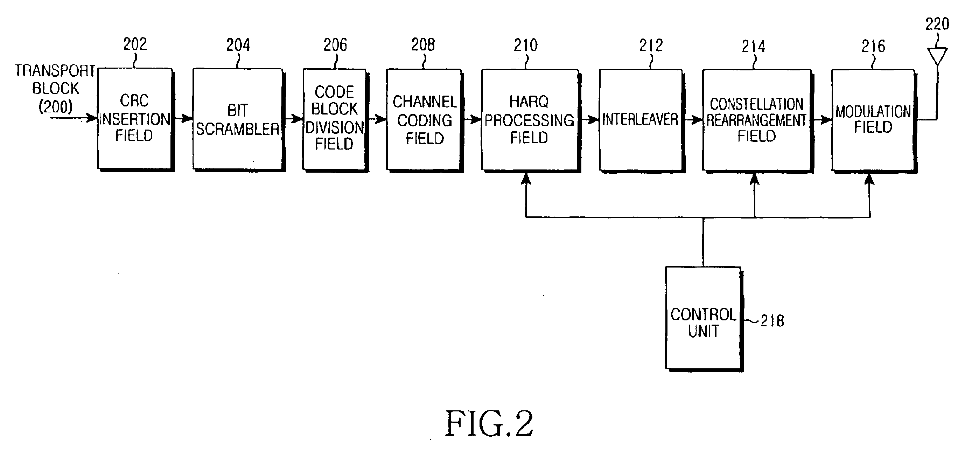

FIG. 2 is a view illustrating a structure of a transmitter for transmitting an HS-PDSCH in a conventional asynchronous mobile communication system.

Referring to FIG. 2, a transport block 200 is input into a bit scrambler 204 through a cyclic redundancy check (CRC) insertion field 202 in which a CRC is added to the transport block 200. The bit scrambler 204 performs a bit scrambling with respect to the transport block 200 having the CRC in order to solve an unevenness of average power of a transport symbol generated in a higher modulation scheme.

In detail, output bits including the CRC are scrambled by means of the bit scrambler 204. Input bits of the bit scrambler 204 are represented as $b_{im,1}$, $b_{im,2}$, $b_{im,3}$,..., $b_{im,B}$, and output bits of the bit scrambler 204 are represented as $d_{im,1}$, $d_{im,1}$, $d_{im,1}$,..., $d_{im,B}$. Herein, B is the number of input bits of the bit scrambler 204. The bit scrambling of the bit scrambler 204 is defined by Equation 1.

Equation 1

$$d_{im,k} = (b_{im,k} + y_k) \bmod 2, \quad k = 1, 2, ...., B$$

In above Equation 1, $y_k$ is obtained through Equation 2.

## Equation 2

$$y'_\gamma = 0 \qquad\qquad\qquad -15 < \gamma < 1$$

$$y'_\gamma = 1 \qquad\qquad\qquad \gamma = 1$$

$$y'_\gamma = \left( \sum_{x=1}^{16} g_x . y'_{r-x} \right) \bmod 2 \qquad 1 < \gamma \leq B$$

Herein, $g = \{g_1, g_2, ..., g_{16}\} = \{0,0,0,0,0,0,0,0,0,0,1,0,1,1,0,1\}$, and $y_k = y'_\gamma$ ($k = 1,2,...,B$).

Bits which have passed through the bit scrambler 204 are output in the form of a code block by passing through a code block division field 206. If the size of the transport block having the CRC exceeds the maximum input bit number for channel coding, the code block division field 206 divides the bits into several code blocks for the purpose of the channel coding. For instance, in a case of a convolution code, the number of bits is 504, and in a case of a turbo code, the number of bits is 5114.

Then, transport blocks are output in the form of coded bits by passing through a channel coding field 208. The channel coding field 208 has at least one coding rate in order to code each of transport blocks. The coding rate includes 1/2 or 3/4.

After that, the coded bits are input into a HARQ processing field 210. The HARQ processing field 210 is a rate matching field capable of outputting the coded bits while rate matching the coded bits. The rate matching is carried out when a transport channel multiplexing occurs or the coded bits do not match with the number of bits transmitted through a radio network. That is, according to the rate matching, the number of output bits matches with the number of bits to be transmitted through the radio network by performing repetition and puncturing processes with respect to coded bits.

After the rate matching has been carried out for the coded bits, the coded bits are input into an interleaver 212. Thus, the coded bits are interleaved by means of the interleaver 212. The interleaver 212 transmits the coded bits after interleaving the coded bits, so that any damage to the coded bits can be distributed over the whole area of the coded bits without being concentrated onto one spot of the coded bits. Therefore, the coded bits may randomly undergo a fading phenomenon so that burst error is prevented, thereby improving the channel coding effect.

Then, the coded bits are rearranged through a constellation rearrangement field 214. Thereafter, the coded bits are output in the form of modulated symbols by passing through a modulation field 216. The modulation scheme includes an M_ary PSK and an M_ary QAM.

A control unit 218 controls the rate matching of the HARQ processing field 210 and the modulation scheme of the modulation field 216 based on a present radio channel state. That is, in a case of a mobile communication system providing the HSDPA service, the control unit 218 provides an effective coding rate for performing the rate matching and an adaptive modulation and coding scheme (AMCS) for selectively using the QPSK or 16 QAM based on the radio channel environment.

Although systematic bits and parity bits are commonly represented as coded bits in the above mentioned transmitter structure, the coded bits output from a turbo coder of the transmitter are divided into systematic bits and parity bits. The systematic bits and the parity bits have their own priority. In other words, when an error occurs in data at a predetermined ratio, it is advantageous to the decoding done by the UE if the error exists in the parity bits instead of the systematic bits. This is because the systematic bits are actual data bits and the parity bits are supplementary bits which are provided for correcting the error when coding the bits. For this reason, the systematic bits selected from among bits mapped with one modulation symbol have higher reliability and the parity bits selected from among the bits mapped with one modulation symbol have lower reliability in order to reduce the error occurring in the systematic bits which are more important than the parity bits.

In addition, there has been suggested a scheme for mapping the coded bits with another modulation symbol different from the modulation symbol of initial transmission by exchanging the systematic bits with the parity bits or inverting the parity bits when retransmitting a signal, and a scheme for transmitting the coded bits by rearranging the coded bits in a packet when retransmitting a signal. Such processes are carried out in the constellation rearrangement field 214.

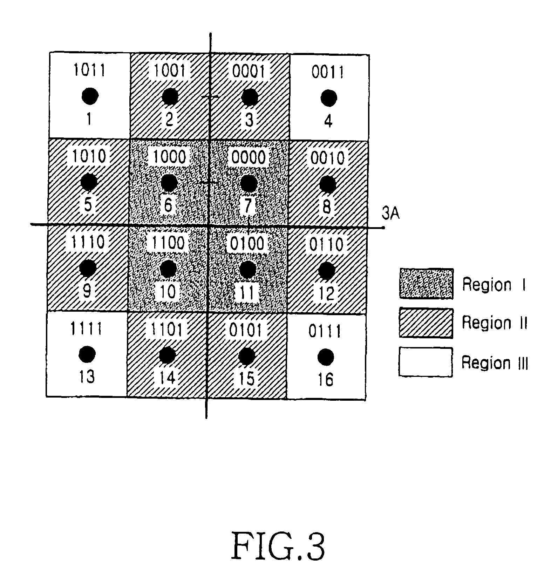

Hereinafter, the constellation rearrangement field 214 will be described. In a case of 16 QAM, four coded bits are mapped with one modulation symbol. The modulation symbol is transmitted to one spot of 16 signal points as shown in FIG. 3.

Referring to FIG. 3, the 16 signal points are divided into three fields including a first region having a highest error probability, a second region having an intermediate error probability, and a third region having a lowest error probability. When taking the retransmission into consideration, the retransmitted symbol is constantly mapped with a predetermined signal point, so the symbols transmitted to signal points 6, 7, 10 and 11 of the first region have a relatively higher error probability as compared with that of symbols transmitted to other signal points. If symbols are transmitted to the signal points having an inferior environment, system performance may be deteriorated. Thus, the bits are inverted when retransmitting a packet in such a manner that the bits are mapped with another modulation symbol different from the modulation symbol of initial transmission, thereby improving system performance.

In addition, the symbol undergoing the M_ary modulation includes log2M bits having a reliability probability different from each other. For instance, in a case of 16 QAM, four coded bits are mapped with one symbol. At this time, the fore two bits are mapped with the symbol with higher reliability and the aft two bits are mapped with the symbol with lower reliability. When taking the retransmission into consideration, the bits transmitted with higher reliability can be retransmitted with higher reliability and the bits transmitted with lower reliability can be retransmitted with lower reliability so that the error probability may increase at specific bits.

However, if the packet is moved by a predetermined bit unit during retransmission of the packet, the bit transmitted with lower reliability can be retransmitted with higher reliability. As a result, an LLR (log likelihood ratio) value of an input bit becomes homogeneous so that decoding performance of a turbo decoder can be improved. The coded symbol, which has undergone the above processes, is transmitted to a channel through an antenna.

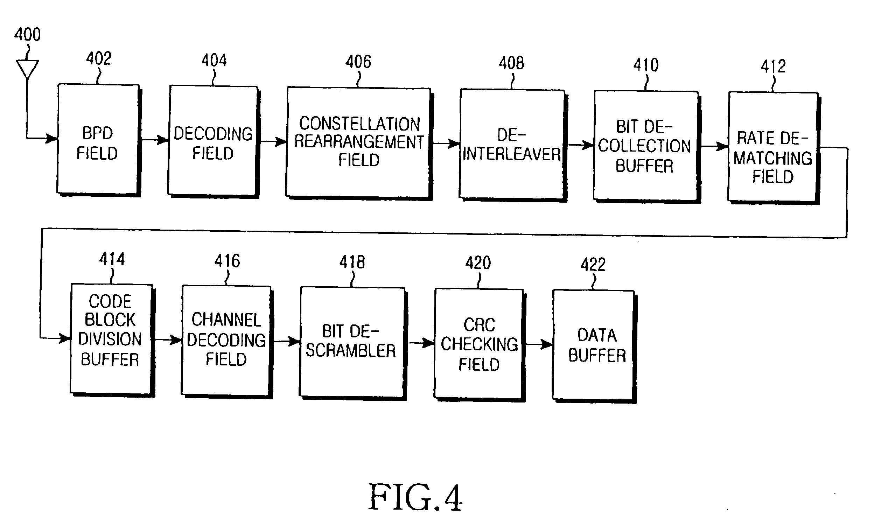

FIG. 4 is a view illustrating a structure of a receiver for receiving the HS-PDSCH in a conventional asynchronous mobile communication system.

Referring to FIG. 4, a ratio of pilot power to traffic power of a signal received through an antenna 400 is estimated by means of a blind power ratio detection (BPD) field 402. In the currently available for 3rd or 3.5th generation mobile communication system, a base station transmits a predetermined pilot signal through a common pilot channel (PICH or CPICH) capable of transmitting signals to all UEs. Thus, the UEs estimate the state of a radio channel by using the pilot signal, in particular, by using a channel estimation scheme for estimating the fading phenomenon. In addition, the UEs may restore the signal distorted by the channel fading to a normal signal through the channel estimation. In addition, the UEs can estimate the ratio of pilot power to traffic power through the channel estimation. Such an estimation for the ratio of pilot power to traffic power is necessary for decoding signal which has been modulated through a high-level modulation scheme, such as 16 QAM or 64QAM. If the transmitter notifies the receiver of the ratio of pilot power to traffic power, the above estimation process is not necessary. In a high speed packet transmission system, such as 1X-EvDv or HSDPA using the high-level modulation above 16 QAM, a receiver estimates the ratio of pilot power to traffic power in order to reduce the burden of signaling. A blind power ratio detection scheme signifies a scheme in which the ratio of pilot power to traffic power cannot be communicated through the signaling or the receiver estimates the ratio of pilot power to traffic power. When the pilot power and traffic power are applied to a decoding field, the average symbol power transmitted from a transmission terminal may become uneven. This will be described later in detail.

A decoding field 404 extracts a bit array from a symbol array by using the power ratio estimated from the BPD field 402 and inputs the bit array into a constellation rearrangement field 406. The constellation rearrangement field 406 rearranges bits forming the bit array. The coded bits passing through the constellation rearrangement field 406 are de-interleaved through a de-interleaver 408 which corresponds to an interleaver of a transmitter. Then, an array of the coded bits is transmitted to a bit de-collection buffer 410 so that the coded bit array is de-collected. After that, the coded bit array is transmitted to a rate de-matching field 412 which performs a rate de-matching with respect to the coded bit array. The coded bits passing through the rate de-matching field 412 are input into a code block division buffer 414 so that the coded bits are divided in the form of code block units by means of the code block division buffer 414. Then, the coded bits are input into a channel decoding field 416. The channel decoding field 416 performs channel decoding with respect to the coded bit array input into the channel decoding field 416 so that information bits are extracted from the coded bit array. The extracted information bits are de-scrambled through a bit de-scrambler 418 and input into a CRC checking field 420 in order to check a CRC error of the information bits. If the CRC error does not occur in the information bits, received data is transmitted to an upper layer and an ACK signal is transmitted into the transmitter. If the CRC error occurs in the information bits, received data are stored in a data buffer 422 so as to combine the received data with retransmission data and a NACK signal is transmitted into the transmitter.

FIG. 3 is view illustrating a signal constellation when a modulation scheme of 16 QAM is employed in a conventional mobile communication system.

Hereinafter, uneven average power generated from a transmitter will be described in detail with reference to FIG. 3. Referring to FIG. 3, if a high-level modulation is used, modulation symbols have mutually different power levels. The power of four modulation symbols (inner symbols) mapped with a first region (Region I) adjacent to a coordinate (0,0) is represented as "$P_{in} = 2A^2$". In addition the power of eight modulation symbols (middle symbols) mapped with a second region (Region II) is represented as "$P_{middle} = 10A^2$" and the power of four modulation symbols (outer symbols) mapped with a third region (Region III) is represented as "$P_{outer} = 18A^2$". Thus, the average power is represented as "$P_{total} = (2A^2+10A^2+18A^2)/3 = 10A^2$". If "A" is 0.3162, $P_{total}$ is "1".

In the following description, "A" is assumed as 0.3162, a modulation symbol is represented as "$S_i$", and the power of the modulation symbol is represented as "$<S_i>$". Herein, i can be replaced with d or p in order to discriminate power of a data symbol from power of a pilot symbol.

Data symbols are transmitted through a traffic channel. The traffic channel may transmit together with the pilot channel. Thus, a signal transmitted from the transmitter can be represented as shown in Equation 3.

Equation 3

$$T_x = W_d A_d S_d + W_p A_p S_p$$

Herein, $W_d$ is the Walsh spreading code for discriminating the data channel from the pilot channel, $W_p$ is the Walsh spreading code for discriminating the pilot channel from the data channel, $A_d$ is a channel gain of the data channel, $A_p$ is a channel gain of the pilot channel, and $S_d$ represents data symbols forming a packet, and $S_p$ represents pilot symbols forming a packet. $S_p$ is predetermined between a transmitter and a receiver. The above symbols also represent the same data in the following equations.

The high speed packet transport system may transmit $T_x$ in a packet unit and the packet includes various slots. A slot has a size of 0.667ms, and the number of slots per one slot may vary depending on a spreading factor (SF) applied to the slot. In a case of HADPA, a packet includes three slots with the SF of 16 so that a total of 480 symbols can be transmitted per one packet. In the case of 16 QAM, one symbol includes four bits, so 1920 bits are generated. In addition, in a case of QPSK, one symbol includes two bits, so 960 bits are generated. When 480 symbols including 120 inner symbols, 240 middle symbols and 120 outer symbols are transmitted, a total average power $P_{total}$ of the 480 symbols is "1". However, the arrangement of the symbols may be irregularly formed due to the characteristics of the data. For instance, if all of the 1920 bits have values of "0", all the symbols become inner symbols in the form of "A+jA". In this case, the total average power $P_{total}$ of the symbols is "0.2". Thus, the receiver may estimate the total average power $P_{total}$ of the symbols as "0.2" instead of "1", even if noise or distortion does not occur in the radio channel. In contrast, if all of bits have values of "1", all symbols will have "3A+j3A" patterns so that the receiver may estimate the total average power $P_{total}$ of the symbols as "1.8".

The uneven average power characteristic can be represented by using a probability density function (PDF). That is, when total transmission power is "1", if 90% of power ($A^2_d = 0.9$) is assigned to the traffic channel, the uneven average power characteristic signifies the PDF characteristic with regard to average power of a transport packet. If three kinds of symbols (inner symbol, middle symbol and outer symbol) are evenly distributed, average power of the traffic channel is represented as $p = A^2_d <S_d> = A^2_d = 0.9$. However, it is impossible to obtain the above average power. That is, a distributional characteristic having a mean (m ) = 0.9 and a standard deviation (σ) = 0.0232 is represented.

If the power of the traffic channel is about 90% of total power ($A^2_d = 0.9$), the average power $<S_d>$ of the symbols is not "1", but "0.8", and AWGN noise ($<N> = 0.2$) having a power of 0.2 is mixed with the signal, the following power ratio will be detected through an accumulated average scheme of the traffic channel, which is a general blind power ratio detection scheme. In a case of AWGN channel, a receiving signal, $R_x$, can be represented as shown in Equation 4.

Equation 4

$$R_x = W_d A_d S_d + W_p A_p S_p + N,$$

wherein N represents noise. If a traffic channel is separated from a receiving signal satisfying above Equation 4 through a Walsh de-covering, a receiving signal is represented as Equation 5.

Equation 5

$$R_x = A_d S_d + N$$

In order to obtain $A_d$ of a signal satisfying Equation 5, accumulated average power of the signal is calculated according to Equation 6.

Equation 6

$$P = A^2_d <S_d> + <N>$$

Herein, if "$<S_d> = 1$" and "$<N> = 0$", which is an ideal case, it can be obtained through Equation 6 that $P = A^2_d = 0.9$. However, if "$<S_d> = 0.9$" and "$<N> = 0.2$", "$P = A^2_d <S_d> + <N> = 1.01$". That is, $P \neq A^2_d$, so it is difficult to obtain a precise value of $A^2_d$.

As mentioned above, if the symbols are uniformly transmitted based on the signal constellation of 16QAM, it is possible to effectively estimate the ratio of pilot power to traffic power. If the HS-PDSCH symbols are unevenly transmitted, an estimation error may occur so that system performance will be degraded. In particular, if bits having values of "0" or "1" are generated, inner symbols or outer symbols are only transmitted, resulting in a serious performance degradation.

In an asynchronous mobile communication system, such a performance degradation is estimated as a level of 1.0 to 1.5 dB. Thus, in order to solve the unevenness of the average power of a transport symbol generated in a high-level modulation scheme, a bit scrambler is necessary in the 3GPP standardization for a transport block having the CRC as shown in FIG. 2.

Meanwhile, as mentioned above, when data is transmitted through the HS-PDSCH, control information is provided through the HS-SCCH in order to demodulate or decode the HS-PDSCH. Accordingly, a UE can decode the HS-PDSCH based on the control information transmitted thereto through the HS-SCCH. At this time, the currently available UE may check the transmission of control information related to UEs after demodulating all of the four HS-SCCHs. In addition, the UE may demodulate the HS-PDSCH after checking the control information. Thus, if the UE erroneously analyzes the HS-SCCH, a receiver may modulate the HS-PDSCH through a series of processes even if data is not UE data. Such an error may not frequently occur. However, if the error occurs, system performance may be seriously degraded.

## SUMMARY OF THE INVENTION

Accordingly, the present invention has been made to solve the above-mentioned problems occurring in the prior art, and an object of the present invention is to provide an apparatus and a method for transceiving data while preventing problems caused by a detection error of control information in a wireless mobile communication system.

Another object of the present invention is to provide an apparatus and a method for performing a channel coding with respect to information bits after bit-scrambling the information bits by using a UE identifier.

Still another object of the present invention is to provide an apparatus and a method for performing a bit descrambling with respect to channel decoded information bits by using a UE identifier.

In order to accomplish these objects, according to a first aspect of the present invention, there is provided a method for transmitting information bits by using a transmitter in a mobile communication system providing a high speed packet data service, the method comprising the steps of: inserting a CRC bit into a transport block transmitted from an upper layer; scrambling bits of the transport block having the CRC bit by receiving a scrambling code from the upper layer, in which the scrambling code is selected to match with a receiver used for receiving the transport block from among scrambling codes assigned to receivers with different values; channel-coding the scrambled bits; and modulating the channel-coded bits.

In order to accomplish these objects, according to a second aspect of the present invention, there is provided an apparatus for transmitting information bits in a mobile communication system providing a high speed packet data service, the apparatus comprising: a CRC insertion field for inserting a CRC bit into a transport block transmitted from an upper layer; a bit scrambler for scrambling bits of the transport block having the CRC bit by receiving a scrambling code from the upper layer, in which the scrambling code is selected to match with a receiver used for receiving the transport block from among scrambling codes assigned to receivers with different values; a channel coding field for performing a channel coding with respect to the scrambled bits; and a modulation field for modulating the channel-coded bits.

In order to accomplish these objects, according to a third aspect of the present invention, there is provided a method for receiving information bits for a high speed packet transmission service from a transmitter by using a receiver having one of scrambling codes in a mobile communication system providing the high speed packet transmission service, the scrambling codes being previously assigned to the mobile communication system with different values, the method comprising the steps of: monitoring a plurality of control channels for the high speed packet transmission service and receiving control information required for receiving information symbol bits; decoding demodulated and coded bits of the information symbol bits into information bits in response to the control information based on a coding rate used by the transmitter; de-scrambling the information bits by receiving a predetermined scrambling code from an upper layer; and performing a CRC checking with respect to the information bits by using CRC bits included in the de-scrambled information bits.

In order to accomplish these objects, according to a fourth aspect of the present invention, there is provided an apparatus for receiving information bits for a high speed packet transmission service from a transmitter by using a receiver having one of scrambling codes in a mobile communication system providing the high speed packet transmission service, the scrambling codes being previously assigned to the mobile communication system with different values, the apparatus comprising: a channel decoding field for decoding demodulated and coded bits of information symbol bits into information bits based on a coding rate used by the transmitter; a bit de-scrambler for de-scrambling the information bits by receiving a predetermined scrambling code from an upper layer; and a CRC checking field for performing a CRC checking with respect to the information bits by using CRC bits included in the de-scrambled information bits.

In order to accomplish these objects, according to a fifth aspect of the present invention, there is provided an method for receiving a data packet for a high speed packet transmission service from a transmitter by using user equipment (UE), the method comprising the steps of: monitoring a plurality of control channels for the high speed packet transmission service and receiving control information required for receiving information symbol bits; checking whether or not the data packet is a retransmitted data packet based on the control information; comparing a transport block size of the data packet with a transport block size of a previous data packet if the data packet is a retransmitted data packet; combining the retransmitted data packet with the previous data packet and storing the combined data packet if the transport block size of the data packet is identical to the transport block size of the previous data packet; storing the retransmitted data packet instead of the previous data packet if the transport block size of the data packet is not identical to the transport block size of the previous data packet; storing the data packet if the data packet is not a retransmitted data packet; performing a bit de-scrambling with respect to the stored data packet by using a predetermined scrambling code; and performing a CRC checking with respect to the information bits included in the data packet by using CRC bits included in the de-scrambled data packet, wherein the scrambling code is transferred from an upper layer and assigned to each UE with different values in order to discriminate UEs from each other.

## BRIEF DESCRIPTION OF THE DRAWINGS

The above and other objects, features and advantages of the present invention will be more apparent from the following detailed description taken in conjunction with the accompanying drawings, in which:

FIG. 1 is a view illustrating channels used for high speed packet transmission in a conventional asynchronous mobile communication system;
FIG. 2 is a view illustrating a structure of a transmitter for transmitting an HS-PDSCH in a conventional mobile communication system;
FIG. 3 is view illustrating a signal constellation when a modulation scheme of 16 QAM is employed in a conventional CDMA mobile communication system;
FIG. 4 is a view illustrating a structure of a receiver for receiving an HS-PDSCH in a conventional mobile communication system;
FIG. 5 is a view illustrating a structure of a transmitter for transmitting an HS-PDSCH in a mobile communication system according to an embodiment of the present invention;
FIG. 6 is a view illustrating a structure of a receiver for receiving an HS-PDSCH in a mobile communication system according to an embodiment of the present invention; and
FIG. 7 is a flowchart illustrating a control flow of a UE according to an embodiment of the present invention.

## DETAILED DESCRIPTION OF THE PREFERRED EMBODIMENTS

Hereinafter, embodiments of the present invention will be described with reference to the accompanying drawings.

In the following detailed description, representative embodiments of the present invention will be described. In addition, a detailed description of known functions and configurations incorporated herein will be omitted for conciseness.

According to the present invention, a transmitter scrambles information bits by using a UE identifier before a channel decoding and a receiver performs a de-scrambling with respect to channel-decoded information bits by using the UE identifier. Thus, the present invention can prevent not only an unevenness of the transmission power, which can be generated when a high-level modulation scheme is used, but also data transmission toward an upper layer caused by an unnecessary decoding of an HS-PDSCH derived from a decoding error for an HS-SCCH.

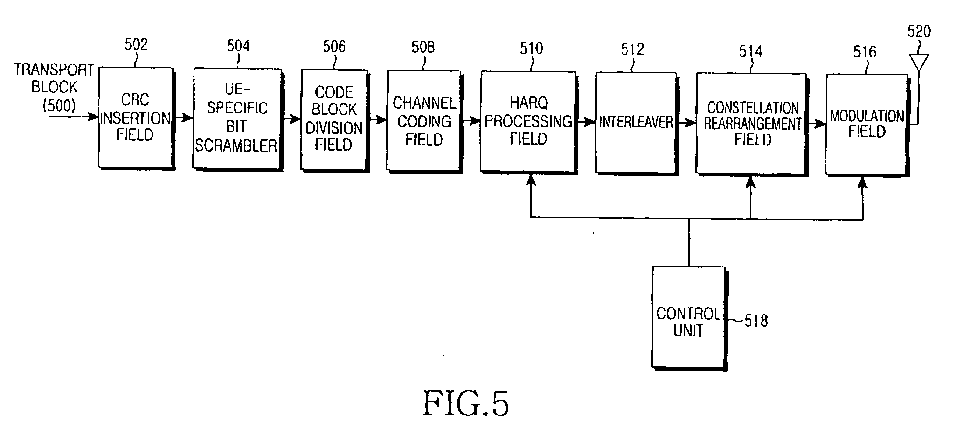

FIG. 5 is a view illustrating a structure of a transmitter for transmitting an HS-PDSCH in a mobile communication system according to an embodiment of the present invention.

Referring to FIG. 5, a transport block 500 is input into a UE-specific bit scrambler 504 through a CRC insertion field 502 in which a CRC is added to the transport block 500. The UE-specific bit scrambler 504 performs a bit scrambling with respect to the transport block 500 having the CRC. At this time, input bits of the UE-specific bit scrambler 504 are represented as $b_{im,1}$, $b_{im,2}$, $b_{im,3}$,...., $b_{im,B}$, and output bits of the UE-specific bit scrambler 504 are represented as $d_{im,1}$, $d_{im,1}$, $d_{im,1}$,..., $d_{im,B}$. Herein, B is a number of input bits of the UE-specific bit scrambler 504. The bit scrambling of the UE-specific bit scrambler 504 is defined as shown in Equation 7.

Equation 7

$$d_{im,k} = (b_{im,k} + y_k) \bmod 2, k = 1, 2,...., B$$

In above Equation 7, $y_k$ is obtained through Equation 8.

Equation 8

$$y'_\gamma = 0 \qquad\qquad -15 < \gamma < 1$$

$$y'_\gamma = 1 \qquad\qquad \gamma = 1$$

$$y'_\gamma = \left( \sum_{x=1}^{16} ue_x . y'_{r-x} \right) \bmod 2 \qquad 1 < \gamma \leq B$$

Herein, ue = {$ue_1$, $ue_2$,..., $ue_{16}$}, $y_k = y'_\gamma$, and y is sequence for bit scrambling.

In above Equation 8, ue = {$ue_1$, $ue_2$,..., $ue_{16}$} is a UE identifier parameter which is differently assigned to UEs. According to the present invention, a bit scrambling is carried out in a different way according to the UE identifier (UE ID) assigned to UEs so that a CRC checking determines an NACK if an HS-PDSCH is demodulated without UE data caused by a detection error in an HS-SCCH. Thus, the present invention can prevent data from being transmitted to an upper layer.

Bits scrambled by means of the UE-specific bit scrambler 504 are divided in the form of a code block by means of a code block division field 506 and inputted into a channel coding field 508. Then, bits forming the transport block are outputted in the form of coded bits by passing through the channel coding field 508. The channel coding field 508 has at least one coding rate in order to code each of transport blocks. The coding rate includes 1/2 or 3/4. In addition, the channel coding field 508 includes a mother code having a mother coding rate of 1/6 or 1/5. Repetition and puncturing processes can be carried out with respect to the coded bits based on the mother coding rate in order to provide a plurality of coding rates. In this case, it is necessary to determine an available coding rate from among the plurality of coding rates.

After that, the coded bits are input into a HARQ processing field 510. The HARQ processing field 510 is a rate matching field for performing rate matching with respect to coded bits. The rate matching signifies the repetition and puncturing processes for the coded bits, which may be carried out when transport channel multiplexing occurs or the coded bits do not match with the number of bits transmitted through a radio network. After the rate matching has been carried out for the coded bits, the coded bits are input into an interleaver 512. Thus, the coded bits are interleaved and output by means of the interleaver 512. The interleaving is necessary to minimize data loss during data transmission.

Then, the coded bits are rearranged through a constellation rearrangement field 514 and input into a modulation field 516. The modulation field 516 transmits the coded bits by mapping the coded bits with symbols according to the modulation schemes, such as an M_ary PSK and an M_ary QAM.

A control unit 518 controls the rate matching of the HARQ processing field 510 and the modulation scheme of the modulation field 516 based on the present radio channel state. That is, in a case of a mobile communication system providing the HSDPA service, the control unit 518 provides an adaptive modulation and coding scheme (AMCS) based on the radio channel environment. The coded symbols, which has undergone the above modulation process, is transmitted through an antenna.

A receiver used for receiving the HSPDA service must monitor at least one HS-SCCH (maximum of four HS-SCCHs). Each HS-SCCH is divided into two parts. Two parts of the HS-SCCH include information represented in Table 1. Thus, the receiver demodulates four HS-SCCHs, and then, demodulates the HS-DSCHs when it is checked that the control information has been transmitted to the UE.

Hereinafter, an exemplary operation of the receiver for demodulating the HS-DSCH will be described.

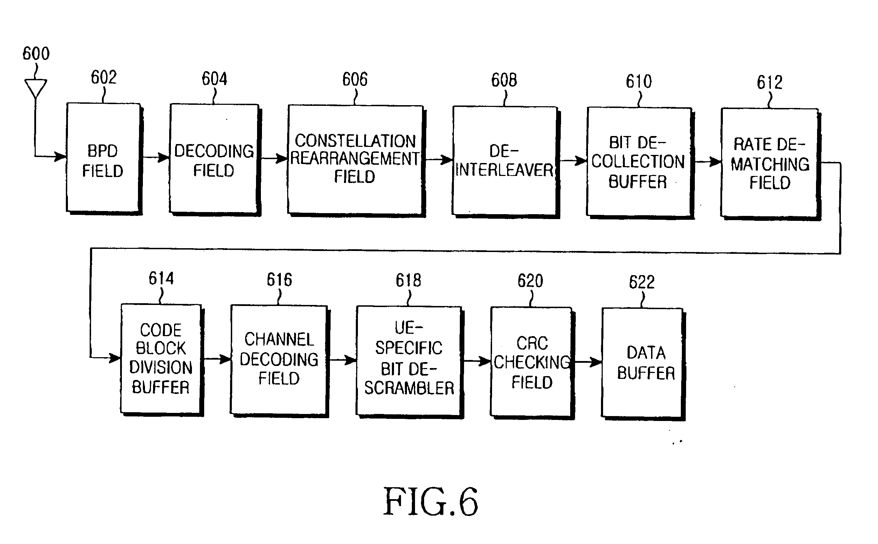

FIG. 6 is a view illustrating a structure of the receiver for receiving the HS-PDSCH according to one embodiment of the present invention.

Referring to FIG. 6, a signal received through an antenna 600 is transmitted to a blind power ratio detection (BPD) field 602. The BDP field 602 estimates the ratio of pilot power to traffic power of the signal. In the currently available $3^{rd}$ generation mobile communication system (1x or UMTS) or $3.5^{th}$ generation mobile communication system (1x-EVDV or HSPDA), a channel estimation scheme is carried out by using a pilot signal of a common pilot channel (PICH or CPICH) capable of transmitting signals to all UEs. That is, a base station transmits a predetermined pilot signal through the common pilot channel so that the UE estimates the state of a radio channel, in particular, the fading phenomenon by using the pilot signal. The UEs may restore the signal distorted by the channel fading to a normal signal through the channel estimation. In addition, the UEs can estimate the ratio of pilot power to traffic power through the channel estimation.

The ratio of pilot power to traffic power obtained through the PDP field 602 is transmitted to a demodulation field 604. The demodulation field 604 extracts a bit array from a symbol array by using the power ratio estimated from the BPD field 602. In addition, the bit array extracted by the demodulation field 604 is input into a constellation rearrangement field 606 so that the constellation rearrangement field 606 rearranges bits forming the bit array. Herein, an operation of the constellation rearrangement field 606 is identical to an operation of a constellation rearrangement field of a transmitter. If the transmitter transmits signals ($s_1$, $s_2$, $s_3$ and $s_4$) in the sequence of $s_3$, $s_4$, $s_1$ and $s_2$, the constellation rearrangement field 606 of the receiver rearranges the signals ($s_3$, $s_4$, $s_1$ and $s_2$,) in the sequence of $s_1$, $s_2$, $s_3$ and $s_4$. That is, the constellation rearrangement field 606 of the receiver operates corresponding to the constellation rearrangement field of the transmitter.

When signals ($s_1$, $s_2$, $s_3$ and $s_4$) are input into the transmitter, the transmitter may rearrange the signals in four ways as shown in Table 2.

Table 2

| Constellation conversion parameter | Output bit sequence | Operation |
|---|---|---|
| 0 | $s_1$, $s_2$, $s_3$, $s_4$ | None |
| 1 | $s_3$, $s_4$, $s_1$, $s_2$, | Swapping MSBs with LSBs |
| 2 | $s_1$, $s_2$, $\overline{s}_3$,$\overline{s}_4$ | Inversion of the logical values of LSBs |
| 3 | $s_3$, $s_4$, $\overline{s}_1$,$\overline{s}_2$ | 1&2 above |

If one of the four rearrangement ways is performed by the transmitter, the rearrangement way is transmitted to the receiver through the HS-SCCH. Thus, the receiver may perform the bit rearrangement process by means of the constellation rearrangement field 606 in order to obtain a bit array having an arrangement of $s_1$, $s_2$, $s_3$ and $s_4$.

The coded bit array rearranged through the constellation rearrangement field 606 is input into a de-interleaver 608. The de-interleaver 608 de-interleaves the coded bits in a manner corresponding to that of the interleaver 512 of the transmitter. Then, the coded bit array is transmitted to a bit de-collection buffer 610. Thus, the bit de-collection buffer 610 outputs the coded bits by dividing the coded bits into systematic bits and parity bits. The systematic bits and parity bits are input into a rate de-matching field 612 which performs a rate de-matching with respect to the systematic bits and parity bits and transmits the systematic bits and parity bits to a code block division buffer 614.

The systematic bits and parity bits are divided in the form of code block units by means of the code block division buffer 614 and transmitted to a channel decoding field 616. The channel decoding field 616 performs channel decoding with respect to the systematic bits and parity bits so that the information bits are extracted from the systematic bits and parity bits. The extracted information bits are input into a UE-specific bit de-scrambler 618, which descrambles the extracted information bits by using codes corresponding to predetermined UE-Ids. Then, the information bits are transferred to a CRC checking field 620.

The CRC checking field 620 checks a CRC error of the information bits by using CRC bits included in the information bits. In addition, the CRC checking field 620 determines whether or not it is necessary to request a signal retransmission based on the CRC error of the information bits. If the CRC error occurs in the information bits, the CRC checking field 620 stores information bits in a data buffer 622 and transmits a NACK signal to the transmitter to request the signal retransmission. If the CRC error does not occur in the information bits, the information bits are transferred to an upper layer and an ACK signal is transmitted to the transmitter.

As described above, according to an embodiment of the present invention, the bit de-scrambling is preferably carried out after transmitting a transport block having the CRC bit in order to solve an unevenness of transmission power derived from a high-level modulation scheme. Thus, the UE performs the bit de-scrambling by using a 16-bit UE-ID received from the upper layer.

If the input bits of the UE-specific bit de-scrambler 618 are represented as $d_{im,1}, d_{im,1}, d_{im,1},..., d_{im,B}$, the bit scrambling of the bit de-scrambler 204 is defined as Equation 9.

Equation 9

$$b_{im,k} = (d_{im,k} + y_k) \text{ mode } 2, k = 1, 2,...., B$$

In above Equation 1, $y_k$ is obtained through Equation 10.

Equation 10

$$y'_\gamma = 0 \qquad\qquad -15 < \gamma < 1$$
$$y'_\gamma = 1 \qquad\qquad \gamma = 1$$
$$y'_\gamma = \left( \sum_{x=1}^{16} ue_x . y'_{r-x} \right) \text{mod } 2 \qquad 1 < \gamma \leq B$$

Herein, $ue = \{ue_1, ue_2,..., ue_{16}\}$ and $y_k$ is $y'_k$ ($k = 1, 2,...., B$). A value of $y'_\gamma$ is preset in the receiver and the transmitter and various values can be used for $y'_\gamma$. In addition, $ue = \{ue_1, ue_2,..., ue_{16}\}$ is used because the UE identifier is a common parameter recognized by both of the base station and the UE, and because the UE identifier has a value, which may vary depending on UEs. According to an embodiment of the present invention, the UE-specific bit de-scrambler 618 performs a bit de-scrambling with respect to the bit array after the bit array has passed through the channel decoding field 616 without requiring any additional signaling or an increase of hardware. After that, CRC checking is carried out by means of the CRC checking field 620. The UE may check the error through the CRC checking because the CRC is transmitted while being scrambled with a UE ID and is received while being de-scrambled with a corresponding UE ID. If the HS-PDSCH is demodulated without UE data, the CRC checking is carried out by means of the CRC checking field, which is de-scrambled by means of other UE ID. Thus, if the error is detected, the UE transmits the NACK signal to the transmitter without transmitting the UE data to the upper layer.

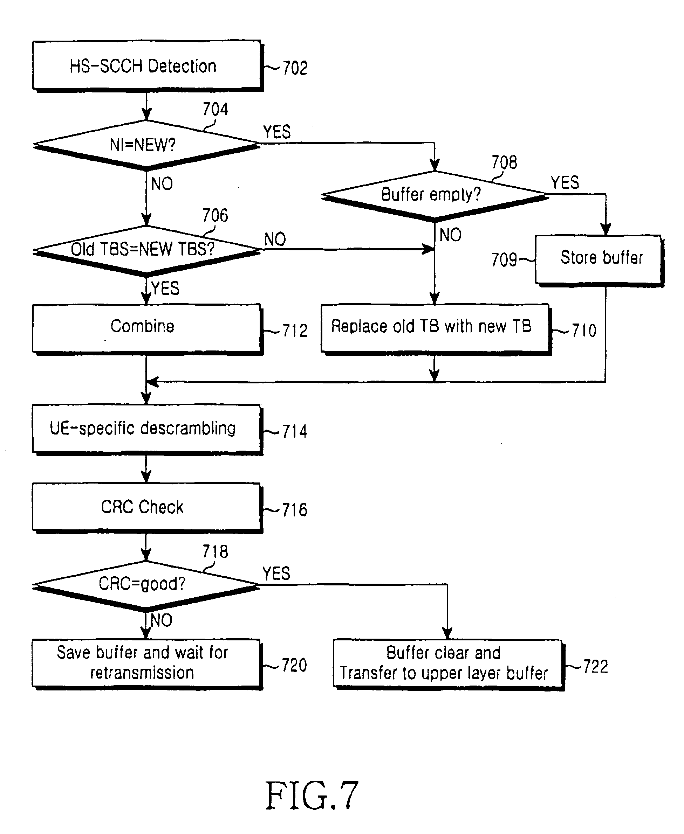

FIG. 7 is a flowchart illustrating a control flow of the UE according to an embodiment of the present invention.

Referring to FIG. 7, the UE detects HS-SCCHs (a maximum of four HS-SCCHs) and demodulates the HS-SCCHs (step 702). The UE can check whether or not the HS-PDSCH is transmitted to the UE through the above demodulation. In step 704, the UE determines whether the packet is a new packet or a retransmitted packet based on a new data indicator (NI) transmitted to the HS-SCCHs. If it is determined that the packet is the new packet in step 704, step 708 is carried out. In addition, if it is determined that the packet is the retransmitted packet in step 704, step 706 is carried out. In step 708, the UE checks whether or not data exists in the buffer in which received packets are stored. If the data exists in the buffer, the UE replaces the old data with new data (step 710). If the buffer has no data, the UE stores the new data in the buffer (step 709).

In step 706, the UE compares an old transport block size (TBS) with a new TBS. If it is determined that the old TBS is different from the new TBS, step 710 is carried out. In addition, if it is determined that the old TBS is equal to the new TBS, step 712 is carried out. In step 710, the UE replaces old data with new data. In step 712, the UE combines an old packet with a new packet.

If step 714 is carried out from steps 709, 710, and 712, the UE performs the de-scrambling with respect to newly stored data or combined data by using the UE ID. The above de-scrambling is carried out for solving an unevenness problem of transmission power generated when the high-level modulation scheme is used. After that, the UE performs step 716 in order to carry out the CRC checking with respect to the de-scrambled data. Then, the UE checks whether or not the result of the CRC checking is good. If the result of the CRC checking is good, step 722 is carried out. In step 722, the UE transmits data stored in the buffer to an upper layer buffer and deletes data stored in the buffer. If the result of the CRC checking is not good, step 720 is carried out. In step 720, the UE stores data in the buffer and waits for the retransmission of data.

Although embodiments of the present invention has been described that the UE ID is used as a scrambling code for the bit scrambling, according to another embodiment of the present invention, other code arrays also can be assigned to UEs.

As described above, when the embodiment of the present invention is employed in a high speed packet data transceiver in a broadband CDMA wireless communication system, an unevenness of a power ratio between pilot power and traffic power can be solved by providing a UE-specific bit scrambler, which performs bit scrambling of the bit array without requiring any additional signaling or an increase in hardware.

In addition, the present invention can prevent data from being transferred to an upper layer even if an HS-PDSCH is demodulated without the UE data due to a detection error in an HS-SCCH. That is, according to an embodiment of the present invention, if the UE receives other UE data due to the detection error in the HS-SCCH, the data are descrambled by means of other de-scrambler having a scrambling scheme different from a scrambling scheme of a scrambler used in a transmitter. Thus, a NACK signal is generated, even if the CRC is subject to an environment for generating an ACK signal, so that data is not transferred to the upper layer.

Furthermore, the present invention compares the TBS stored in the buffer with the new TBS and replaces the old TBS with the new TBS, so other UE data cannot be combined with data stored in the buffer.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method for transmitting information bits by using a transmitter in a mobile communication system providing a high speed packet data service, the method comprising the steps of:

    i) inserting a CRC bit into a transport block transmitted from an upper layer;
    ii) scrambling bits of the transport block having the CRC bit by receiving a scrambling code from the upper layer, in which the scrambling code is selected to match with a receiver used for receiving the transport block from among scrambling codes assigned to receivers with different values;
    iii) channel-coding the scrambled bits; and
    iv) modulating the channel-coded bits.

2. The method as claimed in claim 1, wherein the scrambling code includes a receiver ID.

3. The method as claimed in claim 1, wherein the scrambling code includes scrambling codes (ue = {$ue_1$, $ue_2$,..., $ue_{16}$}) for discriminating receives from each other.

4. The method as claimed in claim 1, wherein, if $y_k$ is identical to $y'_\gamma$, the bit scrambling is defined by a following equation:

$$d_{im,k} = (b_{im,k} + y_k) \text{ mode } 2, \qquad k = 1, 2, \dots, B$$
$$y'_\gamma = 0 \qquad\qquad\qquad -15 < \gamma < 1$$
$$y'_\gamma = 1 \qquad\qquad\qquad \gamma = 1$$
$$y'_\gamma = \left( \sum_{x=1}^{16} ue_x . y'_{r-x} \right) \text{mod } 2 \qquad 1 < \gamma \leq B$$

    wherein, $ue_x$ is a receiver ID including one of {$ue_1$, $ue_2$,..., $ue_{16}$}, $b_{im,k}$ represents bits of the transport block having the CRC bit, and $d_{im,k}$ represents scrambled bits. B is the number of bits of the transport block into which the CRC bits are inserted, $y_k$ is sequence for bit scrambling, and $y'_\gamma$ is sequence for bit scrambling when k in $y_k$ is changed into $\gamma$.

5. The method as claimed in claim 1, wherein the transmitter is a base station and the receiver is a user equipment (UE).

6. The method as claimed in claim 1, further comprising a step of transmitting a UE ID used as the scrambling code to the UE through a control channel.

7. An apparatus for transmitting information bits in a mobile communication system providing a high speed packet data service, the apparatus comprising:

   a CRC insertion field for inserting a CRC bit into a transport block transmitted from an upper layer;
   a bit scrambler for scrambling bits of the transport block having the CRC bit by receiving a scrambling code from the upper layer, in which the scrambling code is selected to match with a receiver used for receiving the transport block from among scrambling codes assigned to receivers with different values;
   a channel coding field for performing a channel coding with respect to the scrambled bits; and
   a modulation field for modulating the channel-coded bits.

8. The apparatus as claimed in claim 7, wherein the scrambling code includes a receiver ID.

9. The apparatus as claimed in claim 7, wherein the scrambling code includes scrambling codes ($ue = \{ue_1, ue_2,..., ue_{16}\}$) for discriminating receivers from each other.

10. The apparatus as claimed in claim 7, wherein, if $y_k$ is identical to $y'_\gamma$, the bit scrambling is defined by a following equation:

$$d_{im,k} = (b_{im,k} + y_k) \bmod 2, \qquad k = 1, 2,...., B$$
$$y'_\gamma = 0 \qquad\qquad -15 < \gamma < 1$$
$$y'_\gamma = 1 \qquad\qquad \gamma = 1$$
$$y'_\gamma = \left( \sum_{x=1}^{16} ue_x . y'_{r-x} \right) \bmod 2 \qquad 1 < \gamma \leq B$$

   wherein, $ue_x$ is a receiver ID including one of $\{ue_1, ue_2,..., ue_{16}\}$, $b_{im,k}$ represents bits of the transport block having the CRC bit, and $d_{im,k}$ represents scrambled bits. B is the number of bits of the transport block into which the CRC bits are inserted, $y_k$ is sequence for bit scrambling, and $y'_\gamma$ is sequence for bit scrambling when k in $y_k$ is changed into $\gamma$.

11. The apparatus as claimed in claim 7, wherein the apparatus includes a base station and the receiver includes a user equipment (UE).

12. The apparatus as claimed in claim 11, a UE ID used as the scrambling code is transmitted to the UE through a control channel.

13. A method for receiving information bits for a high speed packet transmission service from a transmitter by using a receiver having one of scrambling codes in a mobile communication system providing the high speed packet transmission service, the scrambling codes being previously assigned to the mobile communication system with different values, the method comprising the steps of:

   i) monitoring a plurality of control channels for the high speed packet transmission service and receiving control information required for receiving information symbol bits;
   ii) decoding demodulated and coded bits of the information symbol bits into information bits in response to the control information based on a coding rate used by the transmitter;
   iii) de-scrambling the information bits by receiving a predetermined scrambling code from an upper layer; and
   iv) performing a CRC checking with respect to the information bits by using CRC bits included in the de-scrambled information bits.

14. The method as claimed in claim 13, wherein, if $y_k$ is identical to $y'_\gamma$, the bit de-scrambling is defined by a following equation:

$$b_{im,k} = (d_{im,k} + y_k) \bmod 2, \qquad k = 1, 2, \ldots, B$$
$$y'_\gamma = 0 \qquad\qquad -15 < \gamma < 1$$
$$y'_\gamma = 1 \qquad\qquad \gamma = 1$$
$$y'_\gamma = \left( \sum_{x=1}^{16} ue_x . y'_{r-x} \right) \bmod 2 \qquad 1 < \gamma \leq B$$

wherein, $ue_x$ is a scrambling code assigned to each receiver, $d_{im,k}$ represents decoded information bits, and $b_{im,k}$ represents de-scrambled information bits. B is the number of bits of the transport block into which the CRC bits are inserted, $y_k$ is sequence for bit scrambling, and $y'_\gamma$ is sequence for bit scrambling when k in $y_k$ is changed into $\gamma$.

15. An apparatus for receiving information bits for a high speed packet transmission service from a transmitter by using a receiver having one of scrambling codes in a mobile communication system providing the high speed packet transmission service, the scrambling codes being previously assigned to the mobile communication system with different values, the apparatus comprising:

a channel decoding field for decoding demodulated and coded bits of information symbol bits into information bits based on a coding rate used by the transmitter;
a bit de-scrambler for de-scrambling the information bits by receiving a predetermined scrambling code from an upper layer; and
a CRC checking field for performing a CRC checking with respect to the information bits by using CRC bits included in the de-scrambled information bits.

16. The apparatus as claimed in claim 15, wherein, if $y_k$ is identical to $y'_\gamma$, the bit de-scrambling is defined by a following equation:

$$b_{im,k} = (d_{im,k} + y_k) \bmod 2, \qquad k = 1, 2, \ldots, B$$
$$y'_\gamma = 0 \qquad\qquad -15 < \gamma < 1$$
$$y'_\gamma = 1 \qquad\qquad \gamma = 1$$
$$y'_\gamma = \left( \sum_{x=1}^{16} ue_x . y'_{r-x} \right) \bmod 2 \qquad 1 < \gamma \leq B$$

wherein, $ue_x$ is a scrambling code assigned to each receiver, $d_{im,k}$ represents decoded information bits, and $b_{im,k}$ represents de-scrambled information bits. B is the number of bits of the transport block into which the CRC bits are inserted, $y_k$ is sequence for bit scrambling, and $y'_\gamma$ is sequence for bit scrambling when k in $y_k$ is changed into $\gamma$.

17. A method for receiving a data packet for a high speed packet transmission service from a transmitter by using a user equipment (UE), the method comprising the steps of:

i) monitoring a plurality of control channels for the high speed packet transmission service and receiving control information required for receiving information symbol bits;
ii) checking whether or not the data packet is a retransmitted data packet based on the control information;
iii) comparing a transport block size of the data packet with a transport block size of a previous data packet if the data packet is a retransmitted data packet;
iv) combining the retransmitted data packet with the previous data packet and storing the combined data packet if the transport block size of the data packet is identical to the transport block size of the previous data packet;
v) storing the retransmitted data packet instead of the previous data packet if the transport block size of the data packet is not identical to the transport block size of the previous data packet;

vi) storing the data packet if the data packet is not a retransmitted data packet;

vii) performing a bit de-scrambling with respect to the stored data packet by using a predetermined scrambling code; and

viii) performing a CRC checking with respect to the information bits included in the data packet by using CRC bits included in the de-scrambled data packet, wherein the scrambling code is transferred from an upper layer and assigned to each UE with different values in order to discriminate UEs from each other.

**18.** The method as claimed in claim 17, wherein a signal requesting retransmission of the stored data packet is transmitted to a base station if an error is detected through the CRC checking, and the de-scrambled data packet is transferred to the upper layer if the error is not detected through the CRC checking.

**19.** The method as claimed in claim 17, wherein, if $y_k$ is identical to $y'_\gamma$, the bit de-scrambling is defined bv a following equation:

$$b_{im,k} = (d_{im,k} + y_k) \bmod 2, \qquad k = 1, 2, \ldots, B$$
$$y'_\gamma = 0 \qquad\qquad\qquad -15 < \gamma < 1$$
$$y'_\gamma = 1 \qquad\qquad\qquad \gamma = 1$$

$$y'_\gamma = \left( \sum_{x=1}^{16} ue_x . y'_{r-x} \right) \bmod 2 \qquad 1 < \gamma \le B$$

wherein, $ue_x$ is an assigned scrambling code, $d_{im,k}$ represents information bits of the stored data packet, and $b_{im,k}$ represents de-scrambled information bits. B is the number of bits of the transport block into which the CRC bits are inserted, $y_k$ is sequence for bit scrambling, and $y'_\gamma$ is sequence for bit scrambling when k in $y_k$ is changed into $\gamma$.

FIG.1

FIG.2

FIG.3

```
        400
         ▽───┐    ┌──────────┐   ┌──────────┐   ┌──────────────┐   ┌──────────┐   ┌──────────┐   ┌──────────┐
             │    │   402    │   │   404    │   │     406      │   │   408    │   │   410    │   │   412    │
             │    │          │   │          │   │              │   │          │   │          │   │          │
             └──▶ │   BPD    │─▶ │ DECODING │─▶ │CONSTELLATION │─▶ │   DE-    │─▶ │ BIT DE-  │─▶ │ RATE DE- │──┐
                  │  FIELD   │   │  FIELD   │   │REARRANGEMENT │   │INTERLEAVER│  │COLLECTION│   │ MATCHING │  │
                  │          │   │          │   │    FIELD     │   │          │   │  BUFFER  │   │  FIELD   │  │
                  └──────────┘   └──────────┘   └──────────────┘   └──────────┘   └──────────┘   └──────────┘  │
                                                                                                                │
  ┌─────────────────────────────────────────────────────────────────────────────────────────────────────────┘
  │   ┌──────────┐   ┌──────────┐   ┌──────────┐   ┌──────────┐   ┌──────────┐
  │   │   414    │   │   416    │   │   418    │   │   420    │   │   422    │
  │   │          │   │          │   │          │   │          │   │          │
  │   │   CODE   │   │          │   │          │   │          │   │          │
  └─▶ │  BLOCK   │─▶ │ CHANNEL  │─▶ │ BIT DE-  │─▶ │   CRC    │─▶ │   DATA   │
      │ DIVISION │   │ DECODING │   │SCRAMBLER │   │ CHECKING │   │  BUFFER  │
      │  BUFFER  │   │  FIELD   │   │          │   │  FIELD   │   │          │
      └──────────┘   └──────────┘   └──────────┘   └──────────┘   └──────────┘
```

# FIG.4

FIG.5

EP 1 517 499 A2

600

| 602 | 604 | 606 | 608 | 610 | 612 |
|---|---|---|---|---|---|
| BPD FIELD | DECODING FIELD | CONSTELLATION REARRANGEMENT FIELD | DE-INTERLEAVER | BIT DE-COLLECTION BUFFER | RATE DE-MATCHING FIELD |

| 614 | 616 | 618 | 620 | 622 |
|---|---|---|---|---|
| CODE BLOCK DIVISION BUFFER | CHANNEL DECODING FIELD | UE-SPECIFIC BIT DE-SCRAMBLER | CRC CHECKING FIELD | DATA BUFFER |

FIG.6

FIG.7